# EUROPEAN PATENT SPECIFICATION

(11) **EP 3 238 469 B1**
(45) Date of publication and mention of the grant of the patent: **03.11.2021**
(21) Application number: 15874118.1
(22) Date of filing: 10.12.2015
(51) Int. Cl.: H04W 4/06, H04W 88/02, H04W 52/02

(54) **POWER SAVING TECHNIQUES FOR eMBMS**
ENERGIESPARTECHNIKEN FÜR EMBMS
TECHNIQUES D'ÉCONOMIE D'ÉNERGIE POUR EMBMS

(30) Priority: 27.12.2014 US 201414583696
(43) Date of publication of application: 01.11.2017
(73) Proprietor: Apple Inc., Cupertino, CA 95014 (US)
(72) Inventor: PANCHAL, Ajay, Manalapan, New Jersey 07726 (US)
(74) Representative: Barton, Russell Glen
(86) International application number: PCT/US2015/064979
(87) International publication number: WO 2016/105964

(56) References cited:
- EP-A1- 2 449 821
- EP-A1- 3 152 931
- WO-A2-2012/137075
- US-A1- 2012 044 826
- US-A1- 2012 188 930
- US-A1- 2012 281 610
- US-A1- 2013 142 053
- US-A1- 2013 301 509
- US-A1- 2014 140 237
- US-A1- 2014 177 506
- None

## Description

### TECHNICAL FIELD

Embodiments herein generally relate to communications between devices in broadband wireless communications networks.

### BACKGROUND

In an Evolved Universal Mobile Telecommunications System Radio Access Network (E-UTRAN), Long Term Evolution (LTE) broadcast-mode evolved Multimedia Broadcast Multicast Service (eMBMS) technology may be used to provide services to user equipment (UEs) in a Multicast/Broadcast over a Single Frequency Network (MBSFN) area. A UE can obtain information regarding services offered in a given MBSFN area by decoding information in multicast control channel (MCCH) subframes for that MBSFN area. MBSFN areas can overlap, and a serving cell of a given UE may provide access to services of multiple MBSFN areas. In such a case, the serving cell may configure respective MCCH subframes for each of the multiple MBSFN areas. Decoding MCCH subframes may consume both processing power and battery power at the UE, and requiring the UE to decode all of the MCCH subframes of its serving cell regardless of whether it has interest in the services offered by their corresponding MBSFN areas may amount to waste of such resources. As such, it may be desirable that the UE be configured with the ability to decode MCCH subframes for MBSFN areas offering services of interest while being permitted not to decode MCCH subframes for MBSFN areas that do not offer any services of interest to the UE.

EP2 449 821 (D1) discloses a notification mechanism for a UE to distinguish between different MBSFN areas. D1 discloses a problem in the overlapping MBSFN systems in which a cell can belong to two or more MBSFN areas and several MCCHs can exist per cell, and in such situation a UE having subscribed to MBMS-services must read all MCCHs that are defined on the BCCH as soon as it has received an MBMS notification. As a solution, D1 discloses a method for identifying which MCCH a UE shall read on reception of an MBMS notification message.

WO2012/137075 (D2) discloses a method for MBMS service communication. D2 discloses that if a service area of an MBMS service does not cover an MBSFN area where a UE is located, it is a waste of the UE's power to read the MCCH. D2 discloses that the UE receives location area information of an MBMS service distribution and compares location information of the UE with the location area information of the MBMS service distribution.

US2014/140237 (D3) discloses a method for receiving an MBMS services continuously in a new cell after leaving a source cell. D3 discloses that the UE receives TMGI in the MBSFN of the source cell, and after selecting a new cell, the UE reads the system information messages in the new cell, compares the MBSFN areas of the new cell and the source cell, and determines whether the MBSFN area to which the new cell belongs is completely same as that of the source cell, whether there is the same MBSFN in the MBSFN area of the new cell, and whether there is the same TMGI on other MBSFN or MBSFN areas, and depending on the determination, the UE continues reading the service based on the TMGI.

US2013/142053 (D4) discloses a method for optimizing the monitoring of an MBMS session. D4 discloses that the apparatus monitors for a notification of a change of MBMS control information without having previously acquired the MBMS control information. D4 discloses that a UE interested in receiving an MBMS service performs an MCCH information acquisition procedure to obtain the MBSFN area configuration message to obtain MBSFN area, but the UE does not monitor for the notification of MCCH information change until the MCCH information acquisition procedure is complete and it poses a problem of missing the notification. As a solution, D4 proposes that the UE performs the MCCH information acquisition procedure while concurrently monitoring for a notification that the MCCH information has changed.

### BRIEF DESCRIPTION OF THE DRAWINGS

**FIG. 1** illustrates an embodiment of a first operating environment.
**FIG. 2** illustrates an embodiment of a second operating environment.
**FIG. 3** illustrates an embodiment of a first logic flow.
**FIG. 4** illustrates an embodiment of a second logic flow.
**FIG. 5** illustrates an embodiment of a third logic flow.
**FIG. 6** illustrates an embodiment of a storage medium.
**FIG. 7** illustrates an embodiment a device.
**FIG. 8** illustrates an embodiment of a wireless network.

### DETAILED DESCRIPTION

Various embodiments may be generally directed to power saving techniques for evolved Multimedia Broadcast Multicast Service (eMBMS) services. In one embodiment, for example, user equipment (UE) may comprise at least one radio frequency (RF) transceiver, at least one RF antenna, and logic, at least a portion of which is in hardware, the logic to receive a system information message comprising multicast/broadcast over single frequency network (MBSFN) area information, determine an MBSFN area identifier (ID) of an MBSFN area based on the MBSFN area information, and determine whether to decode a multicast control channel (MCCH) for the MBSFN area based on the MBSFN area ID and on MBSFN area mapping information. Other embodiments are described and claimed.

Various embodiments may comprise one or more elements. An element may comprise any structure arranged to perform certain operations. Each element may be implemented as hardware, software, or any combination thereof, as desired for a given set of design parameters or performance constraints. Although an embodiment may be described with a limited number of elements in a certain topology by way of example, the embodiment may include more or less elements in alternate topologies as desired for a given implementation. It is worthy to note that any reference to "one embodiment" or "an embodiment" means that a particular feature, structure, or characteristic described in connection with the embodiment is included in at least one embodiment. The appearances of the phrases "in one embodiment," "in some embodiments," and "in various embodiments" in various places in the specification are not necessarily all referring to the same embodiment.

The techniques disclosed herein may involve transmission of data over one or more wireless connections using one or more wireless mobile broadband technologies. For example, various embodiments may involve transmissions over one or more wireless connections according to one or more 3rd Generation Partnership Project (3GPP), 3GPP Long Term Evolution (LTE), and/or 3GPP LTE-Advanced (LTE-A) technologies and/or standards, including their predecessors, revisions, progeny, and/or variants. Various embodiments may additionally or alternatively involve transmissions according to one or more Global System for Mobile Communications (GSM)/Enhanced Data Rates for GSM Evolution (EDGE), Universal Mobile Telecommunications System (UMTS)/High Speed Packet Access (HSPA), and/or GSM with General Packet Radio Service (GPRS) system (GSM/GPRS) technologies and/or standards, including their predecessors, revisions, progeny, and/or variants.

Examples of wireless mobile broadband technologies and/or standards may also include, without limitation, any of the Institute of Electrical and Electronics Engineers (IEEE) 802.16 wireless broadband standards such as IEEE 802.16m and/or 802.16p, International Mobile Telecommunications Advanced (IMT-ADV), Worldwide Interoperability for Microwave Access (WiMAX) and/or WiMAX II, Code Division Multiple Access (CDMA) 2000 (e.g., CDMA2000 1xRTT, CDMA2000 EV-DO, CDMA EV-DV, and so forth), High Performance Radio Metropolitan Area Network (HIPERMAN), Wireless Broadband (WiBro), High Speed Downlink Packet Access (HSDPA), High Speed Orthogonal Frequency-Division Multiplexing (OFDM) Packet Access (HSOPA), High-Speed Uplink Packet Access (HSUPA) technologies and/or standards, including their predecessors, revisions, progeny, and/or variants.

Some embodiments may additionally or alternatively involve wireless communications according to other wireless communications technologies and/or standards. Examples of other wireless communications technologies and/or standards that may be used in various embodiments may include, without limitation, other IEEE wireless communication standards such as the IEEE 802.11, IEEE 802.11a, IEEE 802.11b, IEEE 802.11g, IEEE 802.11n, IEEE 802.11u, IEEE 802.11ac, IEEE 802.11ad, IEEE 802.11af, and/or IEEE 802.11ah standards, High-Efficiency Wi-Fi standards developed by the IEEE 802.11 High Efficiency WLAN (HEW) Study Group, Wi-Fi Alliance (WFA) wireless communication standards such as Wi-Fi, Wi-Fi Direct, Wi-Fi Direct Services, Wireless Gigabit (WiGig), WiGig Display Extension (WDE), WiGig Bus Extension (WBE), WiGig Serial Extension (WSE) standards and/or standards developed by the WFA Neighbor Awareness Networking (NAN) Task Group, machine-type communications (MTC) standards such as those embodied in 3GPP Technical Report (TR) 23.887, 3GPP Technical Specification (TS) 22.368, and/or 3GPP TS 23.682, and/or near-field communication (NFC) standards such as standards developed by the NFC Forum, including any predecessors, revisions, progeny, and/or variants of any of the above. The embodiments are not limited to these examples The invention is defined by the appended claims.

In addition to transmission over one or more wireless connections, the techniques disclosed herein may involve transmission of content over one or more wired connections through one or more wired communications media. Examples of wired communications media may include a wire, cable, metal leads, printed circuit board (PCB), backplane, switch fabric, semiconductor material, twisted-pair wire, co-axial cable, fiber optics, and so forth. The embodiments are not limited in this context.

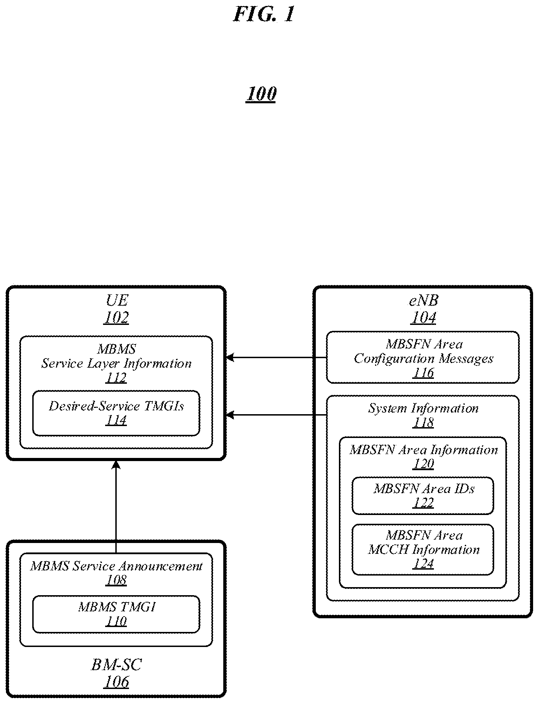

**FIG. 1** illustrates an operating environment 100 such as may be representative of various embodiments. In operating environment 100, a UE 102 is provided with wireless connectivity within a serving cell served by an evolved node B (eNB) 104. In some embodiments, during general operation, UE 102 may receive a Multimedia Broadcast Multicast Service (MBMS) service announcement 108 from a broadcast/multicast service center (BM-SC) 106. In various embodiments, MBMS service announcement 108 may comprise a message that notifies the service layer at UE 102 of an MBMS service offered by BM-SC 106. In some embodiments, MBMS service announcement 108 may comprise a session data protocol (SDP) message, and may comprise one or more SDP parameters that identify various types of information associated with the MBMS service. In various embodiments, BM-SC 106 may comprise an MBMS temporary mobile group identity (TMGI) 110. In some embodiments, MBMS TMGI 110 may comprise an SDP parameter that specifies a TMGI that corresponds to the MBMS service offered by BM-SC 106.

In various embodiments, the service layer at UE 102 may be operative to maintain MBMS service layer information 112 based on information in the MBMS service announcement 108 received from BM-SC 106. In some embodiments, MBMS service layer information 112 may comprise one or more relevant parameters received via MBMS service announcement 108. In various embodiments, UE 102 may be operative to receive MBMS service announcements for multiple MBMS services, from multiple respective BM-SCs. Thus, in some embodiments, UE 102 may be operative to maintain MBMS service layer information 112 that comprises relevant parameters for a plurality of MBMS services. In various embodiments, MBMS service layer information 112 may comprise a set of one or more desired-service TMGIs 114. Each desired-service TMGI 114 may generally comprise a TMGI for an MBMS service that UE 102 and/or a user thereof wishes to use or otherwise deems to be of importance/interest. In some embodiments, each desired-service TMGI 114 may comprise a TMGI for an MBMS service that has been selected for use and/or otherwise designated as being of importance at the service layer at UE 102. In various embodiments, In some embodiments, one or more desired-service TMGIs 114 may comprise TMGIs associated with MBMS services identified/selected based on user input at UE 102. In various embodiments, one or more desired-service TMGIs 114 may comprise TMGIs of MBMS services for which the service layer at UE 102 has established sessions. The embodiments are not limited in this context.

In some embodiments, eNB 104 may provide wireless connectivity to multiple MBSFN areas. In various embodiments, eNB 104 may transmit MBSFN area configuration messages 116 to inform UEs of the respective physical multicast channels (PMCHs) used by those MBSFN areas and to provide other information and/or parameters that UEs will need in order to make use of the MBMS services that they offer. In some embodiments, eNB 104 may send each MBSFN area configuration message 116 over a multicast control channel (MCCH) of its associated MBSFN area. In various embodiments, each such MCCH may comprise resources of different subframe(s) among a plurality of subframes of resources of a wireless channel. In some embodiments, in order to successfully receive a MBSFN area configuration message 116 for a given MBSFN area, UE 102 may need to identify a subframe that comprises the MCCH for that MBSFN area.

In various embodiments, eNB 104 may be operative to transmit MBSFN area information 120 that informs UEs of the MCCH subframe locations for the various MBSFN areas to which eNB 104 provides connectivity. In some embodiments, MBSFN area information 120 may be comprised within system information 118 that eNB 104 broadcasts within the cell that it serves. In various embodiments, MBSFN area information 120 may be contained within a particular system information block (SIB) comprised in such MBSFN area information 120. In an example embodiment, MBSFN area information 120 may be comprised within SIB13. In some embodiments, for each MBSFN area to which UE 102 provides access, MBSFN area information 120 may comprise a corresponding MBSFN area identifier (ID) 122 and MBSFN area MCCH information 124. In various embodiments, each MBSFN area ID 122 may comprise a different respective integer value comprised in the range [0-255], inclusive. In some embodiments, for each MBSFN area ID 122, MBSFN area information 120 may comprise MBSFN area MCCH information 124 identifying the MCCH subframe locations for the MBSFN area associated with that MBSFN area ID 122.

In various embodiments, some of the MBSFN areas made accessible by eNB 104 may not offer any MBMS services that are of interest to UE 102. Since the task of processing MBSFN area MCCH information 124 to identify the location of an MCCH and decoding that MCCH to obtain a MBSFN area configuration message 116 may consume both processing power and battery power, it may be desirable that UE 102 not perform these tasks for MBSFN areas in which it has no interest. Disclosed herein are eMBMS power saving techniques such as may enable UE 102 to only perform MCCH location identification and/or MCCH decoding for MBSFN areas that offer MBMS services that are of interest. According to some such techniques, a network-based approach may be utilized, according to which MBSFN area IDs may be included in the MBMS service announcements sent by BM-SCs. According to various other such techniques, a UE-based approach may be utilized, according to which a UE may store MBSFN area information for MBSFN areas that provide services of interest, and subsequently use that information to select the MBSFN areas for which to locate and decode the associated MCCHs. The embodiments are not limited in this context.

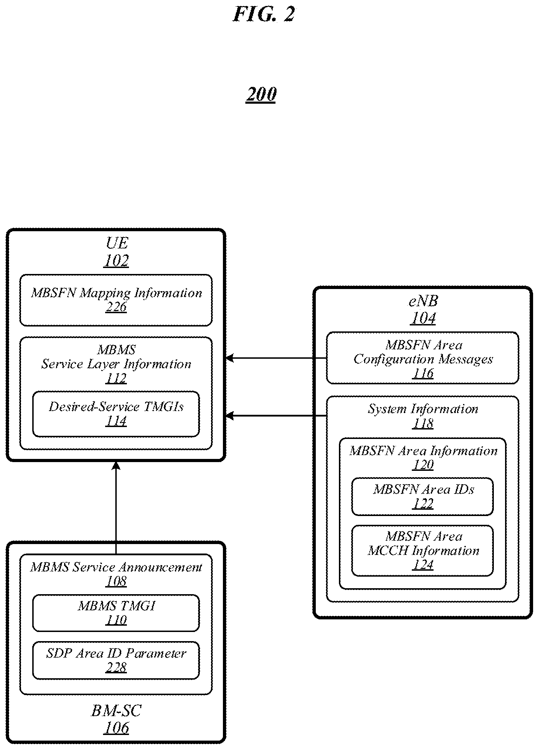

**FIG. 2** illustrates an operating environment 200 such as may be representative of one in which eMBMBs power saving techniques are implemented. In operating environment 200, UE 102 generates MBSFN mapping information 226. MBSFN mapping information 226 generally comprises information indicating, for each of one or more MBMS TMGIs, an MBSFN area ID for an MBSFN area that provides the MBMS service corresponding to that TMGI. In some embodiments, UE 102 may generate MBSFN mapping information based on received MBMS service announcements. In various embodiments, BM-SC 106 may be configured to apply - and UE 102 may be configured to understand - a modified MBMS service announcement format, according to which each MBMS service announcement 108 comprises a session description protocol (SDP) area ID parameter 228 that identifies the MBSFN area ID for the MBSFN area that provides the MBMS service associated with the MBMS TMGI 110. In various embodiments, each time UE 102 receives such an MBMS service announcement 108, it may add information to MBSFN mapping information 226 to reflect the TMGI-MBSFN area ID correspondence indicated by that MBMS service announcement 108 if it is not already reflected in MBSFN mapping information 226. The embodiments are not limited in this context.

In various embodiments, rather than being configured to generate MBSFN mapping information 226 based on MBMS service announcements comprising such a modified format, UE 102 may be configured to generate and store MBSFN mapping information 226 based on information obtained from MBSFN area configuration messages 116. In some embodiments, at an initial point in time, UE 102 may not have any MBSFN mapping information 226 for use. Under such circumstances, UE 102 may decode the MCCHs of all of the MBSFN areas identified by the MBSFN area IDs 122 in MBSFN area information, and thus obtain MBSFN area configuration messages 116 for each of the MBSFN areas. Based on the information in those MBSFN area configuration messages 116, UE 102 may determine, for each of the MBSFN areas, one or more associated MBMS TMGIs, each such TMGI identifying an MBMS service provided by the corresponding MBSFN area. UE 102 may then generate MBSFN mapping information 226 that reflects the TMGI-MBSFN area ID correspondences that it has determined based on the MBSFN area configuration messages 116. In order to avoid having to repeat this process following a power cycle or other type of interruption, UE 102 may store the generated MBSFN mapping information 226 for future use. In some embodiments, UE 102 may store the generated MBSFN mapping information 226 in non-volatile random access memory or in some other type of non-volatile storage. The embodiments are not limited in this context.

Operations for the above embodiments may be further described with reference to the following figures and accompanying examples. Some of the figures may include a logic flow. Although such figures presented herein may include a particular logic flow, it can be appreciated that the logic flow merely provides an example of how the general functionality as described herein can be implemented. Further, the given logic flow does not necessarily have to be executed in the order presented unless otherwise indicated. In addition, the given logic flow may be implemented by a hardware element, a software element executed by a processor, or any combination thereof. The embodiments are not limited in this context.

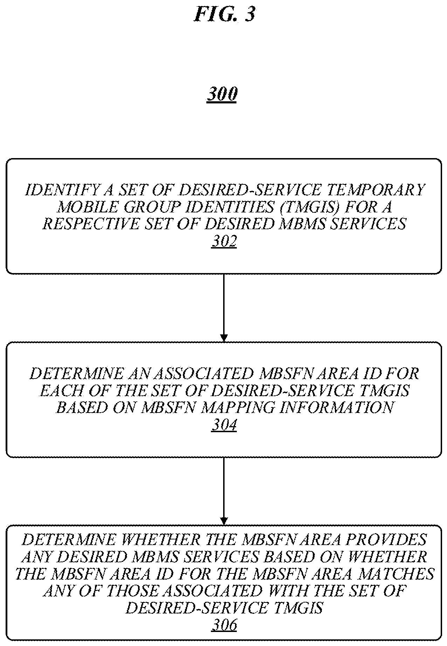

**FIG. 3** illustrates one embodiment of a logic flow 300, which may be representative of the operations executed by one or more embodiments described herein. As shown in logic flow 300, a set of desired-service TMGIs may be identified at 302 for a respective set of desired MBMS services. For example, UE 102 may identify desired-service TMGIs 114. At 304, an associated MBSFN area ID may be determined for each of the set of desired-service TMGIs based on MBSFN mapping information. For example, UE 102 may identify an associated MBSFN area ID for each desired-service TMGIs 114 based on MBSFN mapping information 226. At 306, it may be determined whether an MBSFN area provides any desired MBMS services based on whether the MBSFN area ID for the MBSFN area matches any of those associated with the set of desired-service TGMIs. For example, UE 102 may determine whether an MBSFN area provides any desired MBMS services based on whether its MBSFN area ID matches any of those associated with desired-service TMGIs 114. The embodiments are not limited to these examples.

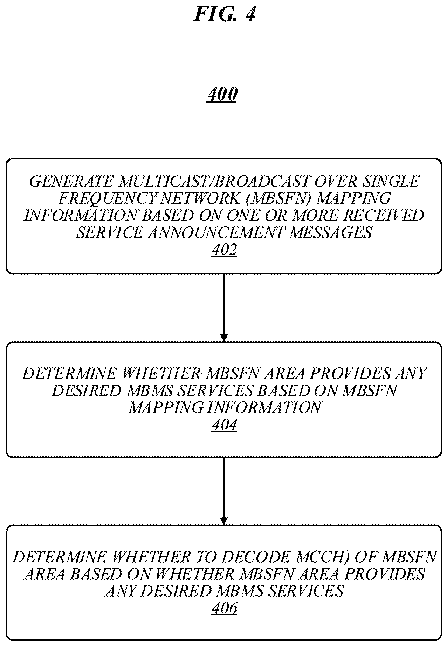

**FIG. 4** illustrates one embodiment of a logic flow 400, which may be representative of the operations executed by one or more embodiments described herein. As shown in FIG. 4, MBSFN mapping information may be generated at 402, based on one or more received service announcement messages. For example, UE 102 may generate MBSFN mapping information 226 based on one or more received MBMS service announcements 108. At 404, it may be determined whether an MBSFN area provides any desired MBMS services based on the MBSFN mapping information. For example, UE 102 may determine whether an MBSFN area provides any desired MBMS services based on MBSFN mapping information 226. At 406, it may be determined whether to decode an MCCH of the MBSFN area based on whether the MBSFN area provides any desired MBMS services. For example, UE 102 may determine whether to decode an MCCH of an MBSFN area based on whether the MBSFN area provides any desired MBMS services. The embodiments are not limited to these examples.

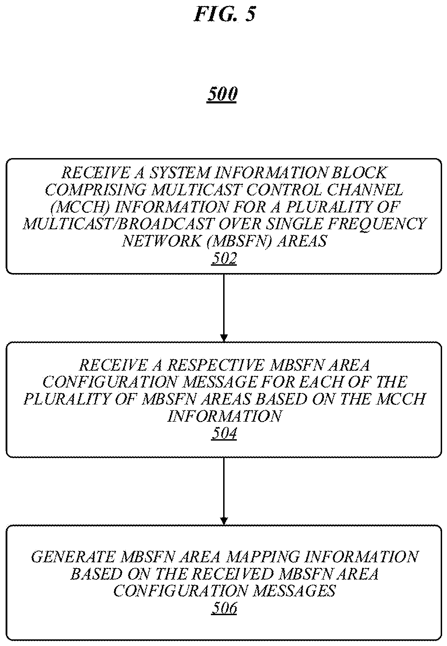

**FIG. 5** illustrates one embodiment of a logic flow 500, which may be representative of the operations executed by one or more embodiments described herein. As shown in FIG. 5, a system information block may be received at 502 that comprises MCCH information for a plurality of MBSFN areas. For example, UE 102 may receive system information 118 that comprises a system information block containing MBSFN area MCCH information 124 for a plurality of MBSFN areas. At 504, a respective MBSFN area configuration message may be received for each of the plurality of MBSFN areas based on the MCCH information. For example, UE 102 may receive a respective MBSFN area configuration message 116 for each of a plurality of MBSFN areas based on MBSFN area MCCH information 124 for each of the plurality of MBSFN areas. At 506, MBSFN area mapping information may be generated based on the received MBSFN area configuration messages. For example, UE 102 may generate MBSFN mapping information 226 based on received MBSFN area configuration messages 116 for a plurality of MBSFN areas. The embodiments are not limited to these examples.

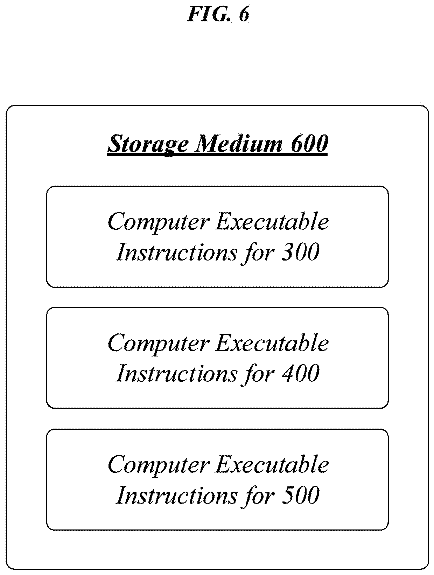

**FIG. 6** illustrates an embodiment of a storage medium 600. Storage medium 600 may comprise any non-transitory computer-readable storage medium or machine-readable storage medium, such as an optical, magnetic or semiconductor storage medium. In various embodiments, storage medium 600 may comprise an article of manufacture. In some embodiments, storage medium 600 may store computer-executable instructions, such as computer-executable instructions to implement one or more of logic flows 300, 400, and 500. Examples of a computer-readable storage medium or machine-readable storage medium may include any tangible media capable of storing electronic data, including volatile memory or non-volatile memory, removable or non-removable memory, erasable or non-erasable memory, writeable or re-writeable memory, and so forth. Examples of computer-executable instructions may include any suitable type of code, such as source code, compiled code, interpreted code, executable code, static code, dynamic code, object-oriented code, visual code, and the like. The embodiments are not limited in this context.

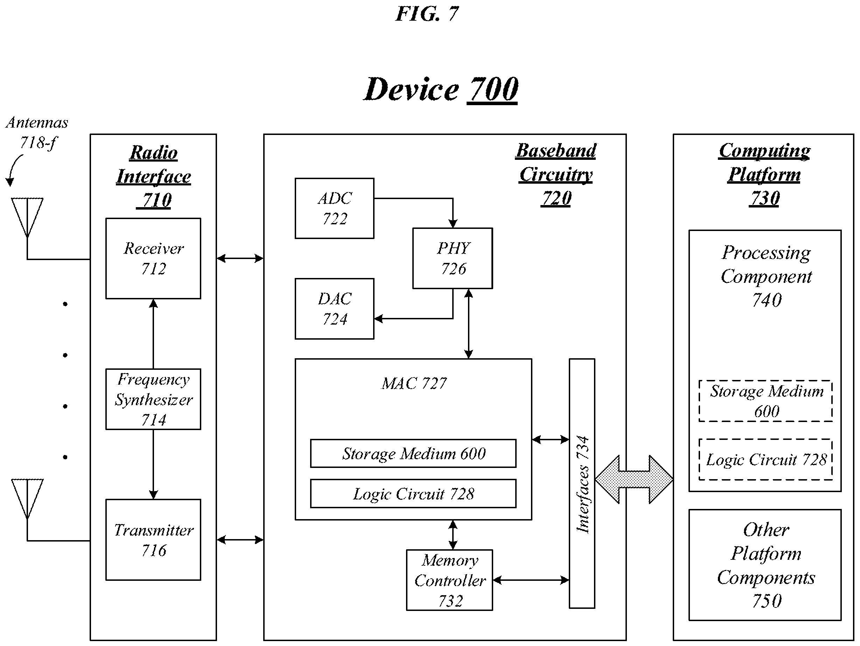

**FIG. 7** illustrates an embodiment of a communications device 700 that may implement one or more of UE 102, logic flows 300, 400, and 500, and storage medium 600. In various embodiments, device 700 may comprise a logic circuit 728. The logic circuit 728 may include physical circuits to perform operations described for one or more of UE 102 and logic flows 300, 400, and 500, for example. As shown in FIG. 7, device 700 may include a radio interface 710, baseband circuitry 720, and computing platform 730, although the embodiments are not limited to this configuration.

The device 700 may implement some or all of the structure and/or operations for one or more of UE 102, logic flows 300, 400, and 500, storage medium 600, and logic circuit 728 in a single computing entity, such as entirely within a single device. Alternatively, the device 700 may distribute portions of the structure and/or operations for one or more of UE 102, logic flows 300, 400, and 500, storage medium 600, and logic circuit 728 across multiple computing entities using a distributed system architecture, such as a client-server architecture, a 3-tier architecture, an N-tier architecture, a tightly-coupled or clustered architecture, a peer-to-peer architecture, a master-slave architecture, a shared database architecture, and other types of distributed systems. The embodiments are not limited in this context.

In one embodiment, radio interface 710 may include a component or combination of components adapted for transmitting and/or receiving single-carrier or multi-carrier modulated signals (e.g., including complementary code keying (CCK), orthogonal frequency division multiplexing (OFDM), and/or single-carrier frequency division multiple access (SC-FDMA) symbols) although the embodiments are not limited to any specific over-the-air interface or modulation scheme. Radio interface 710 may include, for example, a receiver 712, a frequency synthesizer 714, and/or a transmitter 716. Radio interface 710 may include bias controls, a crystal oscillator and/or one or more antennas 718-*ƒ*. In another embodiment, radio interface 710 may use external voltage-controlled oscillators (VCOs), surface acoustic wave filters, intermediate frequency (IF) filters and/or RF filters, as desired. Due to the variety of potential RF interface designs an expansive description thereof is omitted.

Baseband circuitry 720 may communicate with radio interface 710 to process receive and/or transmit signals and may include, for example, an analog-to-digital converter 722 for down converting received signals, a digital-to-analog converter 724 for up converting signals for transmission. Further, baseband circuitry 720 may include a baseband or physical layer (PHY) processing circuit 726 for PHY link layer processing of respective receive/transmit signals. Baseband circuitry 720 may include, for example, a medium access control (MAC) processing circuit 727 for MAC/data link layer processing. Baseband circuitry 720 may include a memory controller 732 for communicating with MAC processing circuit 727 and/or a computing platform 730, for example, via one or more interfaces 734.

In some embodiments, PHY processing circuit 726 may include a frame construction and/or detection module, in combination with additional circuitry such as a buffer memory, to construct and/or deconstruct communication frames. Alternatively or in addition, MAC processing circuit 727 may share processing for certain of these functions or perform these processes independent of PHY processing circuit 726. In some embodiments, MAC and PHY processing may be integrated into a single circuit.

The computing platform 730 may provide computing functionality for the device 700. As shown, the computing platform 730 may include a processing component 740. In addition to, or alternatively of, the baseband circuitry 720, the device 700 may execute processing operations or logic for one or more of UE 102, logic flows 300, 400, and 500, storage medium 600, and logic circuit 728 using the processing component 740. The processing component 740 (and/or PHY 726 and/or MAC 727) may comprise various hardware elements, software elements, or a combination of both. Examples of hardware elements may include devices, logic devices, components, processors, microprocessors, circuits, processor circuits, circuit elements (e.g., transistors, resistors, capacitors, inductors, and so forth), integrated circuits, application specific integrated circuits (ASIC), programmable logic devices (PLD), digital signal processors (DSP), field programmable gate array (FPGA), memory units, logic gates, registers, semiconductor device, chips, microchips, chip sets, and so forth. Examples of software elements may include software components, programs, applications, computer programs, application programs, system programs, software development programs, machine programs, operating system software, middleware, firmware, software modules, routines, subroutines, functions, methods, procedures, software interfaces, application program interfaces (API), instruction sets, computing code, computer code, code segments, computer code segments, words, values, symbols, or any combination thereof. Determining whether an embodiment is implemented using hardware elements and/or software elements may vary in accordance with any number of factors, such as desired computational rate, power levels, heat tolerances, processing cycle budget, input data rates, output data rates, memory resources, data bus speeds and other design or performance constraints, as desired for a given implementation.

The computing platform 730 may further include other platform components 750. Other platform components 750 include common computing elements, such as one or more processors, multi-core processors, co-processors, memory units, chipsets, controllers, peripherals, interfaces, oscillators, timing devices, video cards, audio cards, multimedia input/output (I/O) components (e.g., digital displays), power supplies, and so forth. Examples of memory units may include without limitation various types of computer readable and machine readable storage media in the form of one or more higher speed memory units, such as read-only memory (ROM), random-access memory (RAM), dynamic RAM (DRAM), Double-Data-Rate DRAM (DDRAM), synchronous DRAM (SDRAM), static RAM (SRAM), programmable ROM (PROM), erasable programmable ROM (EPROM), electrically erasable programmable ROM (EEPROM), flash memory, polymer memory such as ferroelectric polymer memory, ovonic memory, phase change or ferroelectric memory, silicon-oxide-nitride-oxide-silicon (SONOS) memory, magnetic or optical cards, an array of devices such as Redundant Array of Independent Disks (RAID) drives, solid state memory devices (e.g., USB memory, solid state drives (SSD) and any other type of storage media suitable for storing information.

Device 700 may be, for example, an ultra-mobile device, a mobile device, a fixed device, a machine-to-machine (M2M) device, a personal digital assistant (PDA), a mobile computing device, a smart phone, a telephone, a digital telephone, a cellular telephone, user equipment, eBook readers, a handset, a one-way pager, a two-way pager, a messaging device, a computer, a personal computer (PC), a desktop computer, a laptop computer, a notebook computer, a netbook computer, a handheld computer, a tablet computer, a server, a server array or server farm, a web server, a network server, an Internet server, a work station, a mini-computer, a main frame computer, a supercomputer, a network appliance, a web appliance, a distributed computing system, multiprocessor systems, processor-based systems, consumer electronics, programmable consumer electronics, game devices, display, television, digital television, set top box, wireless access point, base station, node B, subscriber station, mobile subscriber center, radio network controller, router, hub, gateway, bridge, switch, machine, or combination thereof. Accordingly, functions and/or specific configurations of device 700 described herein, may be included or omitted in various embodiments of device 700, as suitably desired.

Embodiments of device 700 may be implemented using single input single output (SISO) architectures. However, certain implementations may include multiple antennas (e.g., antennas 718-*ƒ*) for transmission and/or reception using adaptive antenna techniques for beamforming or spatial division multiple access (SDMA) and/or using MIMO communication techniques.

The components and features of device 700 may be implemented using any combination of discrete circuitry, application specific integrated circuits (ASICs), logic gates and/or single chip architectures. Further, the features of device 700 may be implemented using microcontrollers, programmable logic arrays and/or microprocessors or any combination of the foregoing where suitably appropriate. It is noted that hardware, firmware and/or software elements may be collectively or individually referred to herein as "logic" or "circuit."

It should be appreciated that the exemplary device 700 shown in the block diagram of FIG. 7 may represent one functionally descriptive example of many potential implementations. Accordingly, division, omission or inclusion of block functions depicted in the accompanying figures does not infer that the hardware components, circuits, software and/or elements for implementing these functions would be necessarily be divided, omitted, or included in embodiments.

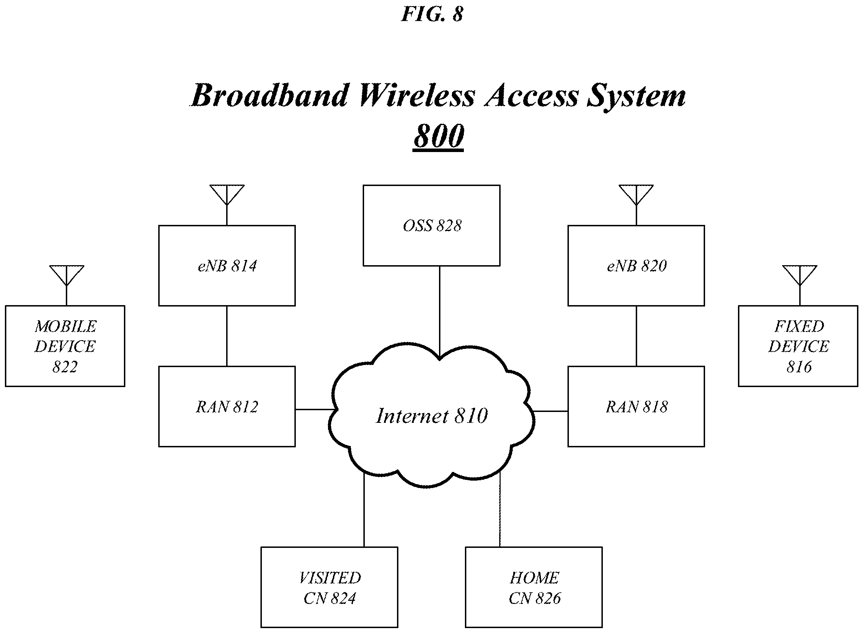

**FIG. 8** illustrates an embodiment of a broadband wireless access system 800. As shown in FIG. 8, broadband wireless access system 800 may be an internet protocol (IP) type network comprising an internet 810 type network or the like that is capable of supporting mobile wireless access and/or fixed wireless access to internet 810. In one or more embodiments, broadband wireless access system 800 may comprise any type of orthogonal frequency division multiple access (OFDMA)-based or single-carrier frequency division multiple access (SC-FDMA)-based wireless network, such as a system compliant with one or more of the 3GPP LTE Specifications and/or IEEE 802.16 Standards, and the scope of the claimed subject matter is not limited in these respects.

In the exemplary broadband wireless access system 800, radio access networks (RANs) 812 and 818 are capable of coupling with evolved node Bs (eNBs) 814 and 820, respectively, to provide wireless communication between one or more fixed devices 816 and internet 810 and/or between or one or more mobile devices 822 and Internet 810. One example of a fixed device 816 and a mobile device 822 is device 700 of FIG. 7, with the fixed device 816 comprising a stationary version of device 700 and the mobile device 822 comprising a mobile version of device 700. RANs 812 and 818 may implement profiles that are capable of defining the mapping of network functions to one or more physical entities on broadband wireless access system 800. eNBs 814 and 820 may comprise radio equipment to provide RF communication with fixed device 816 and/or mobile device 822, such as described with reference to device 700, and may comprise, for example, the PHY and MAC layer equipment in compliance with a 3GPP LTE Specification or an IEEE 802.16 Standard. eNBs 814 and 820 may further comprise an IP backplane to couple to Internet 810 via RANs 812 and 818, respectively, although the scope of the claimed subject matter is not limited in these respects.

Broadband wireless access system 800 may further comprise a visited core network (CN) 824 and/or a home CN 826, each of which may be capable of providing one or more network functions including but not limited to proxy and/or relay type functions, for example authentication, authorization and accounting (AAA) functions, dynamic host configuration protocol (DHCP) functions, or domain name service controls or the like, domain gateways such as public switched telephone network (PSTN) gateways or voice over internet protocol (VoIP) gateways, and/or internet protocol (IP) type server functions, or the like. However, these are merely example of the types of functions that are capable of being provided by visited CN 824 and/or home CN 826, and the scope of the claimed subject matter is not limited in these respects. Visited CN 824 may be referred to as a visited CN in the case where visited CN 824 is not part of the regular service provider of fixed device 816 or mobile device 822, for example where fixed device 816 or mobile device 822 is roaming away from its respective home CN 826, or where broadband wireless access system 800 is part of the regular service provider of fixed device 816 or mobile device 822 but where broadband wireless access system 800 may be in another location or state that is not the main or home location of fixed device 816 or mobile device 822. The embodiments are not limited in this context.

Fixed device 816 may be located anywhere within range of one or both of eNBs 814 and 820, such as in or near a home or business to provide home or business customer broadband access to Internet 810 via eNBs 814 and 820 and RANs 812 and 818, respectively, and home CN 826. It is worthy of note that although fixed device 816 is generally disposed in a stationary location, it may be moved to different locations as needed. Mobile device 822 may be utilized at one or more locations if mobile device 822 is within range of one or both of eNBs 814 and 820, for example. In accordance with one or more embodiments, operation support system (OSS) 828 may be part of broadband wireless access system 800 to provide management functions for broadband wireless access system 800 and to provide interfaces between functional entities of broadband wireless access system 800. Broadband wireless access system 800 of FIG. 8 is merely one type of wireless network showing a certain number of the components of broadband wireless access system 800, and the scope of the claimed subject matter is not limited in these respects.

Various embodiments may be implemented using hardware elements, software elements, or a combination of both. Examples of hardware elements may include processors, microprocessors, circuits, circuit elements (e.g., transistors, resistors, capacitors, inductors, and so forth), integrated circuits, application specific integrated circuits (ASIC), programmable logic devices (PLD), digital signal processors (DSP), field programmable gate array (FPGA), logic gates, registers, semiconductor device, chips, microchips, chip sets, and so forth. Examples of software may include software components, programs, applications, computer programs, application programs, system programs, machine programs, operating system software, middleware, firmware, software modules, routines, subroutines, functions, methods, procedures, software interfaces, application program interfaces (API), instruction sets, computing code, computer code, code segments, computer code segments, words, values, symbols, or any combination thereof. Determining whether an embodiment is implemented using hardware elements and/or software elements may vary in accordance with any number of factors, such as desired computational rate, power levels, heat tolerances, processing cycle budget, input data rates, output data rates, memory resources, data bus speeds and other design or performance constraints.

One or more aspects of at least one embodiment may be implemented by representative instructions stored on a machine-readable medium which represents various logic within the processor, which when read by a machine causes the machine to fabricate logic to perform the techniques described herein. Such representations, known as "IP cores" may be stored on a tangible, machine readable medium and supplied to various customers or manufacturing facilities to load into the fabrication machines that actually make the logic or processor. Some embodiments may be implemented, for example, using a machine-readable medium or article which may store an instruction or a set of instructions that, if executed by a machine, may cause the machine to perform a method and/or operations in accordance with the embodiments. Such a machine may include, for example, any suitable processing platform, computing platform, computing device, processing device, computing system, processing system, computer, processor, or the like, and may be implemented using any suitable combination of hardware and/or software. The machine-readable medium or article may include, for example, any suitable type of memory unit, memory device, memory article, memory medium, storage device, storage article, storage medium and/or storage unit, for example, memory, removable or non-removable media, erasable or non-erasable media, writeable or re-writeable media, digital or analog media, hard disk, floppy disk, Compact Disk Read Only Memory (CD-ROM), Compact Disk Recordable (CD-R), Compact Disk Rewriteable (CD-RW), optical disk, magnetic media, magneto-optical media, removable memory cards or disks, various types of Digital Versatile Disk (DVD), a tape, a cassette, or the like. The instructions may include any suitable type of code, such as source code, compiled code, interpreted code, executable code, static code, dynamic code, encrypted code, and the like, implemented using any suitable high-level, low-level, object-oriented, visual, compiled and/or interpreted programming language.

Numerous specific details have been set forth herein to provide a thorough understanding of the embodiments. It will be understood by those skilled in the art, however, that the embodiments may be practiced without these specific details. In other instances, well-known operations, components, and circuits have not been described in detail so as not to obscure the embodiments. It can be appreciated that the specific structural and functional details disclosed herein may be representative and do not necessarily limit the scope of the embodiments.

Some embodiments may be described using the expression "coupled" and "connected" along with their derivatives. These terms are not intended as synonyms for each other. For example, some embodiments may be described using the terms "connected" and/or "coupled" to indicate that two or more elements are in direct physical or electrical contact with each other. The term "coupled," however, may also mean that two or more elements are not in direct contact with each other, but yet still co-operate or interact with each other.

Unless specifically stated otherwise, it may be appreciated that terms such as "processing," "computing," "calculating," "determining," or the like, refer to the action and/or processes of a computer or computing system, or similar electronic computing device, that manipulates and/or transforms data represented as physical quantities (e.g., electronic) within the computing system's registers and/or memories into other data similarly represented as physical quantities within the computing system's memories, registers or other such information storage, transmission or display devices. The embodiments are not limited in this context.

It should be noted that the methods described herein do not have to be executed in the order described, or in any particular order. Moreover, various activities described with respect to the methods identified herein can be executed in serial or parallel fashion.

Although specific embodiments have been illustrated and described herein, it should be appreciated that any arrangement calculated to achieve the same purpose may be substituted for the specific embodiments shown. It is to be understood that the above description has been made in an illustrative fashion, and not a restrictive one. Thus, the scope of various embodiments includes any other applications in which the above compositions, structures, and methods are used. In addition, in the foregoing Detailed Description, it can be seen that various features are grouped together in a single embodiment for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus the following claims are hereby incorporated into the Detailed Description, with each claim standing on its own as a separate preferred embodiment. In the appended claims, the terms "including" and "in which" are used as the plain-English equivalents of the respective terms "comprising" and "wherein," respectively. Moreover, the terms "first," "second," and "third," etc. are used merely as labels, and are not intended to impose numerical requirements on their objects.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims which define the scope of the invention.

## Claims

1. A wireless communication method, comprising:
generating (402), at user equipment, UE, (102) multicast/broadcast over single frequency network, MBSFN, mapping information comprising information indicating one or more multimedia broadcast/multicast service, MBMS, temporary mobile group identities, TMGIs, and an MBSFN area identifier, ID, for an MBSFN area that provides an MBMS service corresponding to each TMGI;
receiving, at the UE (102), a system information message comprising MBSFN area information;
determining, by processing circuitry of the UE (102), an MBSFN area ID of an MBSFN area based on the MBSFN area information; and
determining whether to decode a multicast control channel, MCCH, for the MBSFN area based on the MBSFN area ID and the MBSFN mapping information.

2. The wireless communication method of claim 1, comprising:
determining (404) whether the MBSFN area provides any desired MBMS services based on the MBSFN area ID and the MBSFN mapping information; and
determining (406) to decode the MCCH for the MBSFN area based on whether the MBSFN area provides any desired MBMS services.

3. The wireless communication method of claim 2, comprising:
identifying (302) a set of desired-service TMGIs for a respective set of desired MBMS services;
determining (304) an associated MBSFN area ID for each of the set of desired-service TMGIs based on the MBSFN mapping information; and
determining (306) whether the MBSFN area provides any desired MBMS services based on whether the MBSFN area ID for the MBSFN area matches any of those associated with the set of desired-service TMGIs.

4. The wireless communication method of any of claims 2 to 3, comprising determining to decode the MCCH for the MBSFN area in response to a determination that the MBSFN area provides at least one desired MBMS.

5. The wireless communication method of claim 4, comprising receiving an MBSFNAreaConfiguration message by decoding the MCCH for the MBSFN area, the MBSFNAreaConfiguration message to comprise MBMS control information for the MBSFN area.

6. The wireless communication method of any of claims 1 to 5, wherein the MBSFN mapping information is generated based on one or more previously received MBSFNAreaConfiguration messages.

7. The wireless communication method of any of claims 1 to 6, wherein the MBSFN mapping information is generated based on one or more previously received MBMS service announcements.

8. At least one non-transitory computer-readable storage medium comprising a set of wireless communication instructions that, in response to being executed on a computing device, cause the computing device to perform a wireless communication method according to any of claims 1 to 7.

9. User equipment, UE (102), comprising:
a touchscreen display; and logic, at least a portion of which is in hardware, the logic configured to generate multicast/broadcast over single frequency network, MBSFN, mapping information comprising information indicating one or more multimedia broadcast/multicast service, MBMS, temporary mobile group identities, TMGIs, and an MBSFN area identifier, ID, for an MBSFN area that provides an MBMS service corresponding to each TMGI,
receive a system information message comprising MBSFN area information, determine an MBSFN area ID of an MBSFN area based on the MBSFN area information, and determine whether to decode a multicast control channel, MCCH, for the MBSFN area based on the MBSFN area ID and the MBSFN mapping information.

10. The UE (102) of claim 9, wherein the logic is configured to generate the MBSFN mapping information based on one or more received service announcement messages, wherein each service announcement message comprises a TMGI for an MBMS service and an MBSFN area ID for an MBSFN area that provides the MBMS service.

11. The UE (102) of claim 9 or 10, wherein the logic is configured to identify a respective MBSFN area ID associated with each of one or more desired-service TMGIs based on the MBSFN mapping information and determine to decode the MCCH of the MBSFN area in response to a determination based on whether the identified MBSFN area ID matches the MBSFN area ID for the MBSFN area.

12. The UE (102) of claim 11, wherein the logic is configured to identify an MCCH subframe for the MBSFN area based on MBSFN area information comprised in a received system information block and obtain MBSFN area configuration information for the MBSFN area by decoding the MCCH of the MBSFN area.

13. The UE (102) of any of claims 9 to 12, each of the one or more received service announcement messages comprises a first session description protocol, SDP, parameter specifying a TMGI for an MBMS service and a second SDP parameter specifying an MBSFN ID for an MBSFN area that provides the MBMS service.

## Patentansprüche

1. Drahtloses Kommunikationsverfahren, umfassend:
Erzeugen (402), an einem Benutzergerät, UE, (102) von Multicast/Broadcast über Einzelfrequenz-Netzwerk-, MBSFN-, Zuordnungsinformation, umfassend Information anzeigend eine oder mehrere Multimedia Broadcast/Multicast Dienst, MBMS, temporäre mobile Gruppenidentitäten, TMGIs, und eine MBSFN-Bereichskennung, ID, für einen MBSFN-Bereich, welcher einen MBMS-Dienst entsprechend zu jeder TMGI bereitstellt;
Empfangen einer Systeminformationsnachricht, umfassend die MBSFN-Bereichsinformation, am UE (102);
Bestimmen einer MBSFN-Bereichs-ID eines MBSFN-Bereichs basierend auf der MBSFN-Bereichsinformation durch eine Verarbeitungsschaltung des UE (102); und
Bestimmen, ob ein Multicast-Steuerungskanal, MCCH, für den MBSFN-Bereich zu dekodieren ist, basierend auf der MBSFN-Bereichs-ID und der MBSFN-Zuordnungsinformation.

2. Drahtloses Kommunikationsverfahren nach Anspruch 1, umfassend:
Bestimmen (404), ob der MBSFN-Bereich beliebige gewünschte MBMS-Dienste bereitstellt, basierend auf der MBSFN-Bereichs-ID und der MBSFN-Zuordnungsinformation; und
Bestimmen (406), den MCCH für den MBSFN-Bereich zu dekodieren, basierend darauf, ob der MBSFN-Bereich beliebige gewünschte MBMS-Dienste bereitstellt.

3. Drahtloses Kommunikationsverfahren nach Anspruch 2, umfassend:
Identifizieren (302) eines Satzes von gewünschten Dienst-TMGIs für einen jeweiligen Satz von gewünschten MBMS-Diensten;
Bestimmen (304) einer assoziierten MBSFN-Bereichs-ID für jeden aus dem Satz von gewünschten Dienst-TMGIs basierend auf der MBSFN-Zuordnungsinformation; und
Bestimmen (306), ob der MBSFN-Bereich beliebige gewünschten MBMS-Dienste bereitstellt, basierend darauf, ob die MBSFN-Bereichs-ID für den MBSFN-Bereich mit irgendeiner derjenigen übereinstimmt, welche mit dem Satz von gewünschten Dienst-TMGIs assoziiert sind.

4. Drahtloses Kommunikationsverfahren nach einem der Ansprüche 2 bis 3, umfassend Bestimmen den MCCH für den MBSFN-Bereich zu dekodieren, als Reaktion auf eine Bestimmung, dass der MBSFN-Bereich mindestens einen gewünschten MBMS bereitstellt.

5. Drahtloses Kommunikationsverfahren nach Anspruch 4, umfassend Empfangen einer MBSFNAreaConfiguration-Nachricht durch Dekodieren des MCCH für den MBSFN-Bereich, wobei die MBSFNAreaConfiguration-Nachricht MBMS-Steuerinformation für den MBSFN-Bereich umfassen soll.

6. Drahtloses Kommunikationsverfahren nach einem der Ansprüche 1 bis 5, wobei die MBSFN-Zuordnungsinformation auf der Grundlage einer oder mehrerer zuvor empfangener MBSFNAreaConfiguration-Nachrichten erzeugt wird.

7. Drahtloses Kommunikationsverfahren nach einem der Ansprüche 1 bis 6, wobei die MBSFN-Zuordnungsinformation basierend auf einer oder mehrerer zuvor empfangener MBMS-Dienstankündigungen erzeugt wird.

8. Mindestens ein nicht-transitorisches, computerlesbares Speichermedium, umfassend einen Satz drahtloser Kommunikationsanweisungen, welcher, als Reaktion auf ein Ausführen auf einer Rechenvorrichtung, die Rechenvorrichtung veranlasst, ein drahtloses Kommunikationsverfahren nach einem der Ansprüche 1 bis 7 durchzuführen.

9. Benutzergerät, UE (102), umfassend:
eine Touchscreen-Anzeige; und
Logik, von der zumindest ein Teil in Hardware ist, konfiguriert zum Erzeugen von Multicast/Broadcast über Einzelfrequenz-Netzwerk-, MBSFN-, Zuordnungsinformation, umfassend Information anzeigend eine oder mehrere Multimedia Broadcast/Multicast Dienst, MBMS, temporäre mobile Gruppenidentitäten, TMGIs, und eine MBSFN-Bereichskennung, ID, für einen MBSFN-Bereich, welcher einen MBMS-Dienst entsprechend zu jeder TMGI bereitstellt, Empfangen einer Systeminformationsnachricht umfassend MBSFN-Bereichsinformation, Bestimmen einer MBSFN-Bereichs-ID eines MBSFN-Bereichs basierend auf der MBSFN-Bereichsinformation, und Bestimmen, ob ein Multicast-Kontrollkanal, MCCH, für den MBSFN-Bereich basierend auf der MBSFN-Bereichs-ID und der MBSFN-Zuordnungsinformation zu dekodieren ist.

10. UE (102) nach Anspruch 9,
wobei die Logik so konfiguriert ist, um die MBSFN-Zuordnungsinformation basierend auf einer oder mehrerer empfangener Dienstankündigungsnachrichten zu erzeugen, wobei jede Dienstankündigungsnachricht eine TMGI für einen MBMS-Dienst und eine MBSFN-Bereichs-ID für einen MBSFN-Bereich, der den MBMS-Dienst bereitstellt, umfasst.

11. UE (102) nach Anspruch 9 oder 10, wobei die Logik konfiguriert ist, um eine jeweilige MBSFN-Bereichs-ID zu identifizieren, die mit jedem von einem oder mehreren gewünschten Dienst-TMGIs assoziiert ist, basierend auf der MBSFN-Zuordnungsinformation, und zu bestimmen, den MCCH des MBSFN-Bereichs zu dekodieren in Reaktion auf eine Bestimmung basierend darauf, ob die identifizierte MBSFN-Bereichs-ID mit der MBSFN-Bereichs-ID für den MBSFN-Bereich übereinstimmt.

12. UE (102) von Anspruch 11,
wobei die Logik konfiguriert ist, um einen MCCH-Subframe für den MBSFN-Bereich zu identifizieren, basierend auf MBSFN-Bereichsinformation, die in einem empfangenen Systeminformationsblock umfasst ist, und MBSFN-Bereichskonfigurationsinformation bezieht für den MBSFN-Bereich durch Dekodieren des MCCH des MBSFN-Bereichs.

13. UE (102) nach einem der Ansprüche 9 bis 12,
wobei jede der einen oder mehreren empfangenen Dienstankündigungsnachrichten einen ersten Sitzungsbeschreibungsprotokoll-Parameter, SDP, welcher eine TMGI für einen MBMS-Dienst spezifiziert, und einen zweiten SDP-Parameter, der eine MBSFN-ID für ein MBSFN-Bereich spezifiziert, der den MBMS-Dienst bereitstellt, umfasst.

## Revendications

1. Un procédé de communication sans fil comprenant :
la génération (402), au niveau d'un équipement utilisateur, UE, (102), d'une information de mappage de multicast/broadcast sur réseau à fréquence unique, MBSFN, comprenant une information indiquant une ou plusieurs identités de groupes mobiles temporaires, TMGI, de service de broadcast/multicast multimédia, MBMS, et un identificateur, ID, de zone MBSFN pour une zone MBSFN qui délivre un service MBMS correspondant à chaque TMGI ;
la réception, au niveau de l'UE (102), d'un message d'information de système comprenant une information de zone MBSFN ;
la détermination, par une circuiterie de traitement de l'UE (102), d'un ID de zone MBSFN d'une zone MBSFN sur la base de l'information de zone MBSFN ; et
la détermination s'il y a lieu de décoder un canal de contrôle de multicast, MCCH, pour la zone MBSFN sur la base de l'ID de zone MBSFN et de l'information de mappage MBSFN.

2. Le procédé de communication sans fil selon la revendication 1, comprenant :
la détermination (404) si la zone MBSFN délivre ou non n'importe quels services MBMS souhaités sur la base de l'ID de zone MBSFN et de l'information de mappage MBSFN ; et
la détermination (406) de décoder le MCCH pour la zone MBSFN sur la base de ce que la zone MBSFN délivre ou non n'importe quels services MBMS souhaités.

3. Le procédé de communication sans fil selon la revendication 2, comprenant :
l'identification (302) d'un ensemble de TMGI de service souhaité pour un ensemble respectif de services MBMS souhaités ;
la détermination (304) d'un ID de zone MBSFN associé pour chacun de l'ensemble de TMGI de service souhaité sur la base de l'information de mappage MBSFN ; et
la détermination (306) si la zone MBSFN délivre ou non n'importe quels services MBMS souhaités sur la base de ce que l'ID de zone MBSFN pour la zone MBSFN correspond ou non à n'importe lequel de ceux associés à l'ensemble de TMGI de services souhaités.

4. Le procédé de communication sans fil selon une des revendications 2 à 3, comprenant la détermination de décoder le MCCH pour la zone MBSFN en réponse à une détermination que la zone MBSFN délivre au moins un MBMS souhaité.

5. Le procédé de communication sans fil selon la revendication 4, comprenant la réception d'un message de configuration de zone MBSFN en décodant le MCCH pour la zone MBSFN, le message de configuration de zone MBSFN devant comprendre une information de contrôle MBMS pour la zone MBSFN.

6. Le procédé de communication sans fil selon une des revendications 1 à 5, dans lequel l'information de mappage MBSFN est générée sur la base d'un ou plusieurs messages de configuration de zone MBSFN reçus précédemment.

7. Le procédé de communication sans fil selon une des revendications 1 à 6, dans lequel l'information de mappage MBSFN est générée sur la base d'une ou plusieurs annonces de service MBMS précédemment reçues.

8. Au moins un support de stockage non transitoire lisible par calculateur comprenant un ensemble d'instructions de communication sans fil qui, en réponse à leur exécution sur un dispositif informatique, amènent le dispositif informatique à réaliser un procédé de communication sans fil selon une des revendications 1 à 7.

9. Equipement utilisateur, UE (102), comprenant :
un afficheur à écran tactile ; et
une logique, dont au moins une partie est en matériel, la logique étant configurée pour générer une information de mappage de multicast/broadcast sur réseau à fréquence unique, MBSFN, comprenant une information indiquant une ou plusieurs identités de groupes mobiles temporaires, TMGI, de service de broadcast/multicast multimédia, MBMS, et un identificateur, ID, de zone MBSFN pour une zone MBSFN qui délivre un service MBMS correspondant à chaque TMGI, recevoir un message d'information de système comprenant une information de zone MBSFN, déterminer un ID de zone MBSFN d'une zone MBSFN sur la base de l'information de zone MBSFN, et déterminer s'il y a lieu de décoder un canal de contrôle de multicast, MCCH, pour la zone MBSFN sur la base de l'ID de zone MBSFN et de l'information de mappage MBSFN.

10. L'UE (102) selon la revendication 9, dans lequel la logique est configurée pour générer l'information de mappage MBSFN sur la base d'un ou plusieurs messages d'annonce de service reçues, dans lequel chaque message d'annonce de service comprend un TMGI pour un service MBMS et un ID de zone MBSFN pour une zone MBSFN qui délivre le service MBMS.

11. L'UE (102) selon la revendication 9 ou 10, dans lequel la logique est configurée pour identifier un ID de zone MBSFN respectif associé à chacun d'un ou plusieurs TMGI de service souhaité sur la base de l'information de mappage MBSFN et déterminer de décoder le MCCH de la zone MBSFN en réponse à une détermination sur la base de ce que l'ID de zone MBSFN identifié correspond ou non à l'ID de zone MBSFN pour la zone MBSFN.

12. L'UE (102) selon la revendication 11, dans lequel la logique est configurée pour identifier une sous-trame MCCH pour la zone MBSFN sur la base d'une information de zone MBSFN comprise dans un bloc d'information de système reçu et obtenir une information de configuration de zone MBSFN pour la zone MBSFN en décodant le MCCH de la zone MBSFN.

13. L'UE (102) selon une des revendications 9 à 12, chacun des un ou plusieurs messages d'annonce de service reçues comprend un premier paramètre de protocole de description de session, SDP, spécifiant un TMGI pour un service MBMS et un second paramètre SDP spécifiant un ID MBSFN pour une zone MBSFN qui délivre le service MBMS.
